(19) Europäisches Patentamt
European Patent Office
Office européen des brevets

(11) **EP 1 498 646 B1**

(12) **FASCICULE DE BREVET EUROPEEN**

(45) Date de publication et mention
de la délivrance du brevet:
**15.08.2007   Bulletin 2007/33**

(51) Int Cl.:
*F16K 5/02* *(2006.01)*

(21) Numéro de dépôt: **04291608.0**

(22) Date de dépôt: **25.06.2004**

(54) **Dispositif de vanne**

Ventilvorrichtung

Valve device

(84) Etats contractants désignés:
**BE DE FR**

(30) Priorité:  **17.07.2003   FR 0308714**

(43) Date de publication de la demande:
**19.01.2005   Bulletin 2005/03**

(73) Titulaire: **SNECMA**
**75015 Paris (FR)**

(72) Inventeurs:
• **Faye, Olivier**
**27120 Menilles (FR)**

• **Pattyn, Jean-Luc**
**27600 Gaillon (FR)**
• **Barre, William**
**76360 Bouville (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
**EP-A- 0 524 589        EP-A- 1 128 108**
**GB-A- 588 396          GB-A- 1 175 306**
**US-A- 2 639 883        US-A- 3 314 643**
**US-A- 3 815 871**

**Description**

**Domaine de l'invention**

La présente invention concerne un dispositif de vanne de type vanne de régulation à obturateur rotatif qui permet le réglage de la perte de charge dans un circuit de circulation de fluide tel qu'un circuit d'alimentation de fluide cryotechnique utilisé dans les moteurs-fusées. Ce type de vanne est muni d'un élément d'obturation qui, en fonction de sa position, régule la perte de charge et, par conséquent, le débit de fluide dans un conduit.

**Art antérieur**

Les vannes de régulation sont des organes de contrôle indispensables à tout moteur ou dispositif dans lequel l'action d'un fluide est requise. Par exemple, dans les moteurs-fusées, les vannes de régulation assurent la maîtrise de la puissance et des paramètres internes du moteur. La régulation opérée dans de tels moteurs par les vannes, doit être à la fois précise et fiable étant donné son influence sur l'ensemble du système. La solution actuelle consiste à motoriser des vannes d'arrêt ou de réglage avec des actionneurs dits "proportionnels", à savoir qu'ils permettent via un dispositif de commande spécifique d'assurer une correspondance entre une consigne et une position réelle de l'actionneur et, par conséquent, de la vanne. Les vannes ainsi utilisées sont généralement de type quart de tour à boisseau, papillon ou lumière et l'augmentation de la précision de réglage de la vanne, qui influe directement sur le gain de performance du moteur, passe par un accroissement de la précision de positionnement de l'actionneur. Ceci se traduit par une augmentation des coûts de l'actionneur et du système de traitement associé pour le contrôle de positionnement qui croissent de façon exponentielle en fonction de l'augmentation de précision de positionnement. En effet, ce surcoût est largement amplifié par la commande de l'actionneur qui requiert une boucle de contrôle locale plus rapide et plus précise, ce qui, de façon connue, engendre des investissements sur l'électronique très élevés.

Ainsi, ce type de solution atteint rapidement ses limites vis-à-vis des exigences de performances qui sont maintenant de plus en plus élevées en terme de coût de développement mais récurrentes vis-à-vis du gain apporté par la fonction.

Les documents EP 1 128 108, US 3 815 871, US 2 639 883, US 3 314 643 et EP 0 524 589 montrent des réalisations de dispositifs de vanne comprenant un élément d'obturation rotatif.

**Objet et description succincte de l'invention**

La présente invention vise à remédier aux inconvénients précités et à réaliser un dispositif de vanne de régulation qui permet un contrôle précis de la perte de charge tout en minimisant le coût induit sur l'actionneur.

Ces buts sont atteints grâce à un dispositif de vanne de régulation tel que défini dans la revendication 1.

Ainsi, on dispose d'un élément d'obturation à grande course de régulation qui requière une précision de positionnement sur l'actionneur bien moindre par rapport aux dispositifs actuels sans pour autant diminuer la précision de régulation de la vanne. Les coûts induits sur l'actionneur sont alors significativement diminués.

Grâce à la structure en forme de jupe avec échancrure de l'élément d'obturation, il est possible de dégager totalement la veine d'écoulement du fluide du conduit en position ouverte, l'élément d'obturation étant totalement escamoté dans la partie de vanne qui se trouve en dehors de la veine d'écoulement définie par le conduit de circulation de fluide. En d'autres termes, lorsque la vanne est en position d'ouverture, l'élément d'obturation s'efface complètement du conduit de manière à éliminer tout obstacle dans le conduit de circulation et à laisser le fluide circuler librement sans pertes de charge ou perturbations dues à la présence d'une partie de l'élément d'obturation dans l'écoulement. Par conséquent, la capacité de régulation de la vanne est très importante puisque son domaine de régulation s'étend des simples fuites autour de l'élément d'obturation en position de fermeture jusqu'au plein dégagement du conduit en position d'ouverture. La vanne de régulation selon la présente invention permet donc de combiner une grande course de régulation tout en gardant l'avantage des vannes classiques à boisseau rotatif qui sont assimilables à un tube en position ouverte.

Le profil de l'échancrure peut être défini en fonction de la loi de perte de charge désirée qui peut être linéaire ou non.

La jupe de l'élément d'obturation peut être de forme tronconique ou cylindrique.

Selon une caractéristique de l'invention, l'échancrure présente un profil droit qui délimite une ouverture se rétrécissant jusqu'à rejoindre l'extrémité inférieure de la jupe. Ceci permet d'obtenir une pente de variation de perte de charge quasi linéaire lorsque l'élément d'obturation est en rotation.

Selon une autre caractéristique de l'invention, l'échancrure présente un profil qui est fonction de la loi de perte de charge désirée qui peut être alors non linéaire.

L'actionneur comprend au moins un moteur électrique et un réducteur dont la sortie est accouplée avec l'arbre d'entraînement.

Dans des applications spatiales, l'actionneur est de préférence lent et irréversible. Ceci présente l'avantage de pouvoir autoriser la régulation de tout ou partie d'un moteur-fusée sans nécessité d'électronique dédiée ou de commande proportionnelle en vol.

Pour un fonctionnement en boucle fermée, l'actionneur peut encore comprendre un capteur de position. Pour des besoins particuliers de fiabilité, le moteur et/ou le capteur de position peuvent être redondés.

Selon un aspect particulier de l'invention, le dispositif de vanne comprend un système de butée mécanique réglable formé d'une butée mobile solidaire de l'arbre d'entraînement et d'une butée fixe réglable sur le corps de vanne.

Plus précisément, la butée fixe comprend une bague comportant un ergot, la bague étant réglable en position sur une bride du corps de vanne.

La bague peut comporter une première pluralité de trous espacés uniformément suivant un premier intervalle angulaire et la bride du corps de vanne peut comporter une seconde pluralité de trous espacés uniformément suivant un second intervalle angulaire, le réglage de la butée étant alors réalisé par immobilisation de la bague sur la bride au moyen d'une goupille d'arrêt. L'écart entre les deux intervalles angulaires permet de définir une résolution de réglage de la butée. Pour faciliter le réglage de la butée, les trous peuvent être formés dans le plan radial de la bride et de la bague pour permettre l'introduction de la goupille par le côté de la bride.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :

- la figure 1 est une vue schématique en coupe transversale d'un dispositif de vanne conformément à un premier mode de réalisation selon l'invention,
- la figure 2 est une vue schématique d'une variante de réalisation d'un élément d'obturation selon l'invention,
- la figure 3 est une vue en perspective d'un deuxième mode de réalisation du dispositif de vanne de l'invention,
- la figure 4 est une vue en perspective d'un troisième mode de réalisation du dispositif de vanne de l'invention,
- la figure 5 est une vue en perspective éclatée d'un système de butée réglable du dispositif de vanne selon l'invention,
- la figure 6 est une vue schématique en coupe montrant le positionnement du système de butée de la figure 4, et
- la figure 7 est une vue schématique en coupe montrant une variante de réalisation d'un système de butée réglable conformément à l'invention.

### Description détaillée des modes de réalisation de l'invention

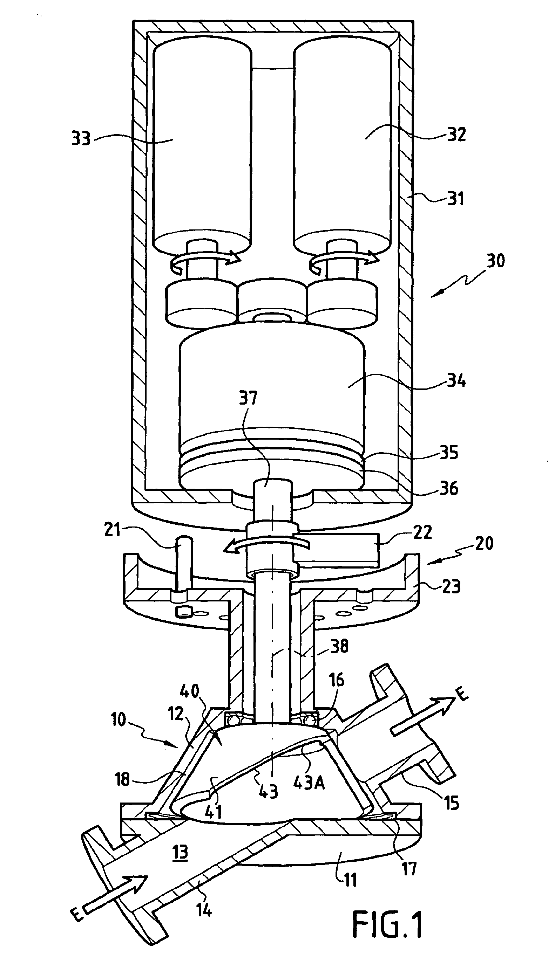

La figure 1 représente, selon un premier mode de réalisation de l'invention, un dispositif de vanne de régulation qui comprend un corps de vanne 10 formé par un corps inférieur 11 et un corps supérieur 12 reliés entre eux de façon étanche au moyen d'un joint 17. Les corps 11 et 12 comprennent respectivement des portions de canal 14 et 15 délimitant un conduit 13 de circulation de fluide selon un écoulement E. Les portions de canal 14 et 15 comprennent chacune une bride de raccordement pour permettre l'insertion du dispositif de vanne dans un circuit de circulation de fluide comme un circuit de fluide cryotechnique dans un moteur-fusée par exemple. Le corps supérieur 12 comporte une cavité 18 destinée à recevoir un élément d'obturation 40.

L'élément d'obturation 40 est formé d'une jupe 41 fermée dans sa partie supérieure qui se prolonge par un épaulement (non représenté) qui vient en appui sur un roulement 16 à contact oblique reprenant les efforts axiaux et latéraux. La partie supérieure de l'élément d'obturation est connectée en son centre à un arbre d'entraînement 37 destiné à entraîner l'élément d'obturation en rotation sur un axe 38 qui correspond à l'axe de rotation de la jupe 41 sur elle-même. Sur la figure 1, la jupe 41 présente une forme tronconique. Toutefois, la jupe peut être de forme cylindrique ou autre en fonction de la forme correspondante de la cavité 18 ménagée dans le corps supérieur 12. La jupe 41 présente une échancrure 43 formant une ouverture sur la paroi de celle-ci pour permettre la circulation du fluide dans le conduit 13. Plus précisément, l'actionnement de la vanne s'opère par la mise en rotation de l'élément d'obturation 40 entre une position de fermeture, dans laquelle la jupe 41 obstrue le conduit 13, et une position d'ouverture, dans laquelle l'échancrure 43 coopère totalement avec le conduit 13 libérant ainsi une section rectiligne d'écoulement à très faible perte de charge. Par conséquent, l'échancrure 43 doit présenter au moins une première portion 43A qui forme une ouverture de dimension équivalente à la section de portion de canal 15 pour permettre l'effacement complet de la jupe 41 lorsque la vanne est en position de pleine ouverture. Sur la figure 1, l'échancrure 43 présente un profil droit en pente définissant une ouverture qui va en se rétrécissant progressivement jusqu'à l'extrémité inférieure de la jupe 41.

Un des aspects remarquables du dispositif de la présente invention réside dans la forme du profil de l'échancrure 43. En effet, lorsque l'élément d'obturation 40 est entraîné en rotation autour de son axe 38 entre la position de fermeture et d'ouverture de la vanne, la perte de charge dans le conduit 13, et, par conséquent, le débit du fluide, pourront être contrôlés en fonction du profil de l'échancrure 43 qui apparaît progressivement dans la section de portion de canal 15.

Telle qu'illustrée sur la figure 1, l'échancrure 43 présente un profil rectiligne permettant d'obtenir une pente de variation de perte de charge quasi linéaire en fonction de la rotation de l'élément d'obturation. Toutefois, la forme du profil de l'échancrure peut être adaptée en fonction de la loi de perte de charge désirée dans la vanne.

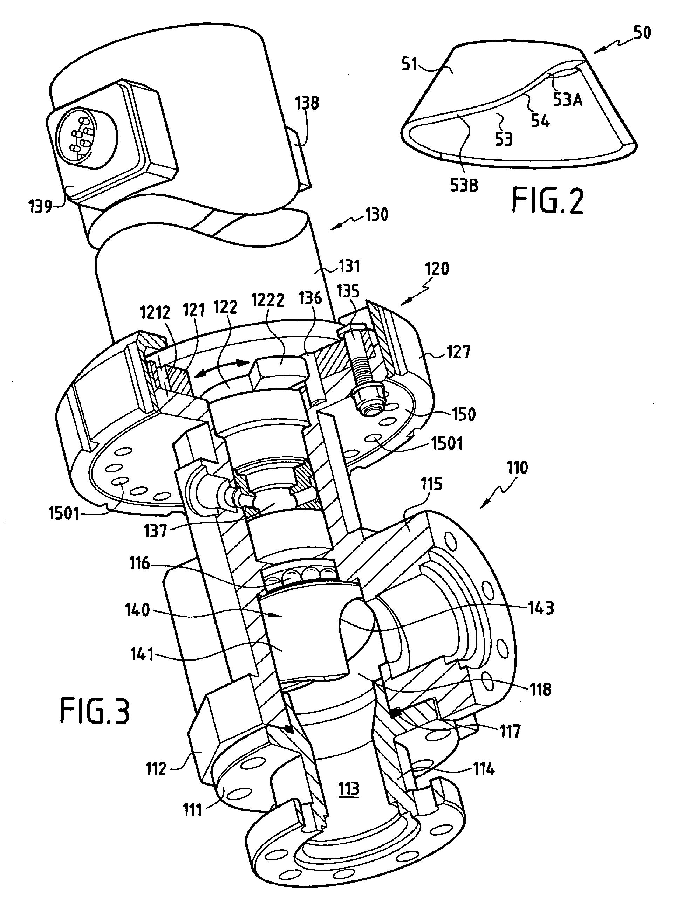

A titre d'exemple, la figure 2 illustre un élément d'obturation 50 dont la jupe 51 présente un profil non rectiligne pour obtenir une loi de perte de charge non linéaire lors de la rotation de l'élément d'obturation. L'échancrure 53 comporte un bord 54 dont l'inclinaison varie de façon à présenter, dans une première portion 53A de l'échancrure, une inclinaison relativement importante tandis que, dans une seconde portion 53B, le bord 54 présente une inclinaison plus faible. Ceci permet d'obtenir une remontée de perte de charge importante lors de la rotation de l'élément d'obturation après la pleine ouverture. Ceci ne constitue qu'un exemple de variante de forme qui peut être obtenue pour satisfaire une loi de perte de charge particulière. Conformément à l'invention, tout autre type de forme qui permet de définir une loi de perte de charge spécifique peut être réalisée. On pourra par exemple avoir une échancrure dont le bord comprend des créneaux pour créer des seuils de paliers dans l'évolution de la perte de charge.

Une autre caractéristique intéressante de l'élément d'obturation selon l'invention est l'étendue sur laquelle l'échancrure peut être ménagée autour de la jupe. En effet, pour remplir son rôle d'obturateur, il suffit que l'élément d'obturation 40 comporte une portion de jupe pleine d'une largeur correspondante à la section du conduit 13 ou plus spécifiquement d'une largeur correspondante au diamètre de la section de la portion de conduit 15. Ainsi, dans une position définie comme la position de fermeture de la vanne, la portion de jupe laissée entière occultera totalement la portion de conduit 15 empêchant ainsi presque toute circulation du fluide dans cette dernière. Par conséquent, le reste du périmètre de la jupe 41 peut être utilisé pour usiner l'échancrure. On obtient alors un profil d'évolution qui peut être défini sur une grande course. A titre d'exemple, pour un diamètre de section de portion de canal de 25 mm, il est possible d'obtenir une ouverture sur la jupe qui s'étend sur 270° de course. Toutefois, il est possible d'avoir des ouvertures qui s'étendent sur des courses plus importantes. D'une manière générale, la course maximum possible avec l'élément d'obturation selon l'invention est fonction du rapport entre la section du conduit et le diamètre de l'élément d'obturation.

Ainsi, il est possible de diminuer de façon significative et économique la précision requise pour l'actionneur par la seule utilisation de l'élément d'obturation propre à l'invention. En particulier, si l'on compare la solution de la présente invention, qui autorise des courses jusqu'à 270° et plus, avec les vannes conventionnelles à boisseau rotatif de type quart de tour (i.e. une course sur 90°), on constate que, pour une précision de réglage de la perte de charge équivalente, le dispositif de vanne de la présente invention demande une précision de positionnement au niveau de l'actionneur bien moindre que celle requise avec une vanne conventionnelle. A titre d'exemple, pour une vanne ayant 250° de course, on estime que le besoin en précision sur l'actionneur est cinq fois inférieur (20%) de ce qu'il doit être sur une vanne quart de tour conventionnelle qui autorise 50° de course de régulation. En d'autres termes, pour une même précision, l'erreur maximum admise sur un actionneur couplé à la vanne de l'invention est de 0,5° au lieu de 0,1° pour une vanne conventionnelle. Ceci permet de diminuer significativement le coût de l'ensemble du dispositif.

Pour entraîner en rotation l'élément d'obturation et, plus précisément, la jupe autour de son axe 38, l'arbre d'entraînement 37 est relié à un actionneur 30 déporté de la partie hydraulique du dispositif délimitée par le corps de vanne 10. Bien que l'actionneur décrit ici est un actionneur électrique, d'autres types d'actionneurs, tels que des actionneurs rotatifs hydrauliques ou pneumatiques par exemple, peuvent être utilisés dans le dispositif de vanne de l'invention. L'actionneur 30 comprend un carter 31 renfermant au moins un moteur électrique 32 qui transmet son mouvement à un réducteur 34 dont la sortie est accouplée à l'arbre d'entraînement 37. Pour des utilisations dans des systèmes embarqués, telles que dans les moteurs-fusées, le moteur 32 peut être redondé par l'ajout d'un second moteur 33 identique. Le ou les moteurs du dispositif de vanne de l'invention sont de préférence des moteurs à courant continu à balais qui présentent notamment une aptitude à fonctionner un certain temps en couple bloqué, un fort couple de détente pour assurer l'immobilisation du moteur en vibration, une aptitude au fonctionnement hors atmosphère ou en atmosphère raréfié et une aptitude au fonctionnement en créneaux de tension.

Un capteur de position 35, qui peut être lui aussi redondé par un second capteur 36, est disposé sur l'arbre 37 au niveau de la sortie du réducteur pour permettre de réaliser le contrôle et, le cas échéant, l'asservissement en position dans l'actionneur. Grâce à la faible vitesse d'actionnement induite par le réducteur, qui a de préférence un taux de réduction supérieur à 200, et la grande course de régulation de l'élément d'obturation, la commande déportée par un ordinateur de bord peut être assurée avec une puissance très réduite correspondant à celle demandée par les électrovannes habituellement utilisées sur les moteurs-fusées.

On obtient ainsi un actionneur lent, irréversible et utilisant des moteurs à courant continu à balais qui autorisent une commande sans électronique par simple fermeture d'un circuit de commande. Ce type d'actionneur lorsqu'il est couplé avec la vanne de l'invention présente des avantages importants notamment dans les applications spatiales puisqu'il permet la régulation de tout ou partie d'un moteur-fusée sans nécessité d'électronique dédiée ou de commande proportionnelle de vol.

Comme expliqué précédemment, le coût de revient de l'actionneur est grandement diminué par le relâchement de précision que permet la partie hydraulique de la vanne. Cette diminution de précision requise au niveau de l'actionneur a un impact direct sur le réducteur et les capteurs de position en ce qu'il est possible d'utiliser des réducteurs et des capteurs standards à faible coût. A précision de réglage de perte de charge identique, une vanne classique (ex. type quart de tour) exige une précision de positionnement de l'actionneur de 0.1° alors que, avec le dispositif de l'invention, il suffit d'avoir une précision de 0.5°. Ceci constitue un avantage technologique important notamment dans des applications cryotechniques où la maîtrise des jeux à toutes les températures est problématique.

La figure 3 illustre une variante de réalisation du dispositif de vanne selon l'invention qui montre en outre un autre mode de réalisation de la partie hydraulique du dispositif de vanne de l'invention. En effet, sur la figure 3, le dispositif comprend un corps de vanne 110 formé d'un corps inférieur 111 et d'un corps supérieur 112 reliés de façon étanche par un joint 117. A la différence des portions de conduit 14 et 15 du dispositif de la figure 1 qui formaient un conduit 13 axial, les corps 111 et 112 comprennent respectivement des portions de conduit 114 et 115 qui définissent un conduit 113 coudé. D'autre part, le corps supérieur 112 comporte une cavité 118 cylindrique qui accueille un élément d'obturation 140 comprenant une jupe 141 également de forme cylindrique. La jupe 141 comporte une échancrure 143 qui peut être de différentes formes suivant la loi de perte de charge voulue comme expliqué précédemment. Conformément à l'invention, l'échancrure 143 doit présenter au moins une première portion qui forme une ouverture de dimension équivalente à la section du conduit 113 pour permettre l'effacement complet de la jupe 141 lorsque la vanne est en position de pleine ouverture. Ainsi, en position d'ouverture, les pertes de charges sont réduites à celles dues à la seule forme du conduit.

Le dispositif de vanne comprend aussi un actionneur 130 du même type que celui décrit en relation avec la figure 1 qui, tel qu'illustré ici, peut comprendre des connecteurs 138 et 139 pour la commande de ce dernier.

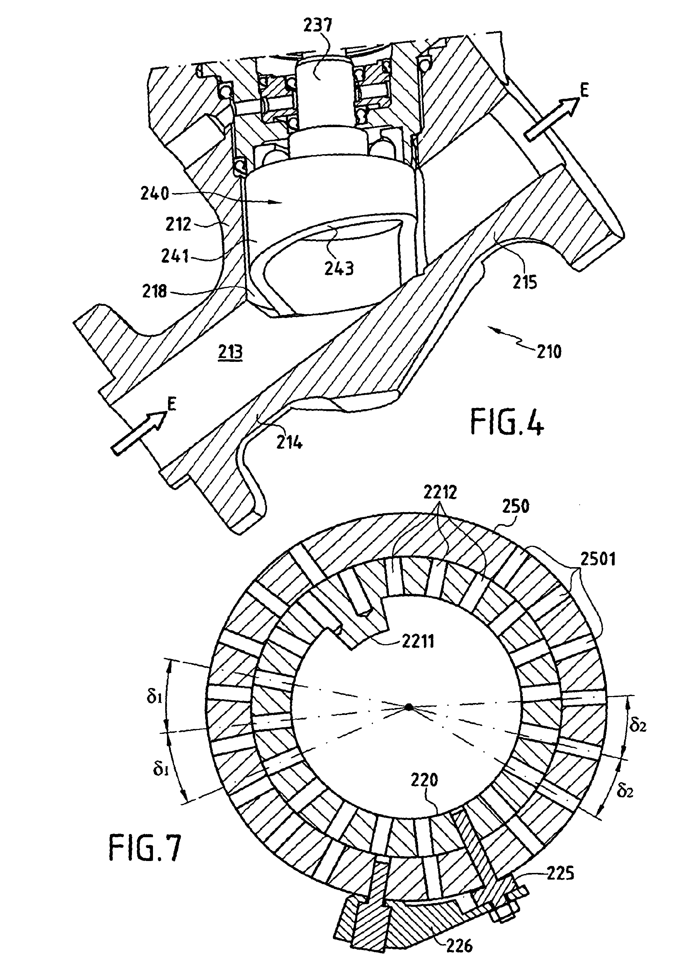

La figure 4 montre un troisième mode de réalisation du dispositif de vanne selon l'invention. Le dispositif comprend un corps de vanne 210 formé de deux portions de conduit 214 et 215 définissant un conduit axial 213. Le corps supérieur 212 comporte une cavité 218 cylindrique qui accueille un élément d'obturation 240 comprenant une jupe 241 de forme cylindrique. La jupe 241 comporte une échancrure 243 qui peut présenter des dimensions variables en fonction de la course de régulation désirée. De plus, l'échancrure peut présenter différentes formes suivant la loi de perte de charge définie comme expliqué précédemment. Conformément à l'invention, l'échancrure 243 est dimensionnée de manière à permettre l'effacement total de la jupe 241 du conduit en position d'ouverture. Ainsi, en position d'ouverture, le conduit 213 peut être assimilé à un simple tube, aucun obstacle se trouvant dans la veine d'écoulement définie par le conduit.

L'élément d'obturation 240 est relié à un arbre d'entraînement 237 qui est connecté à des moyens actionneurs adaptés comme ceux décrits ci-dessus.

Un système de butée mécanique réglable de façon discrète et à immobilisation par obstacle peut être disposé dans le dispositif de vanne de l'invention. Celui-ci est représenté schématiquement sur la figure 1 par un système de butée 20 qui est formé d'une butée mobile 22 accouplée sur l'arbre d'entraînement 37 et d'une butée fixe 21 réglable.

Ce système de butée réglable à immobilisation par obstacle qui est basé sur un principe de perçage de pas différents va être décrit en détail en relation avec les figures 3, 5 et 6. Le système de butée 120 représenté avec le mode de réalisation de la figure 3 peut être également mis en oeuvre de la même façon avec le dispositif de vanne de la figure 1 ou 4.

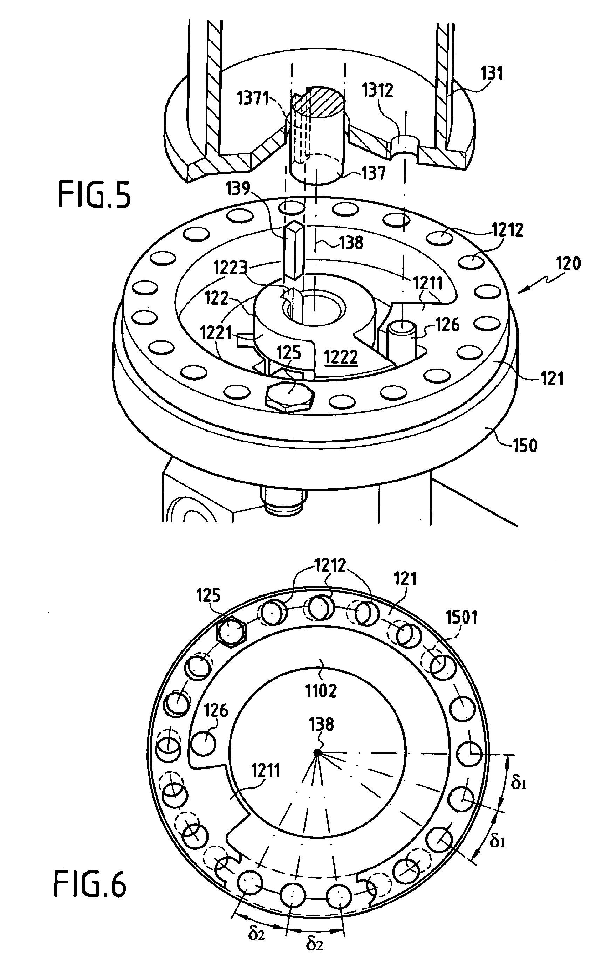

Comme illustré à la figure 3, le système de butée 120 est disposé entre le corps de vanne 110 qui constitue la partie hydraulique du dispositif de vanne et l'actionneur 130. Plus précisément, sur la figure 5, l'arbre d'entraînement 137 est muni, dans sa partie supérieure, d'une butée mobile 122 formée d'un manchon 1221 et d'un doigt 1222. Le manchon 1221 est accouplé à l'arbre 137 par une clavette 139 qui coopère avec une première rainure 1371 ménagée sur l'arbre et une seconde rainure 1223 usinée dans le manchon 1221. Le manchon peut être solidarisé à l'arbre d'entraînement par tout autre dispositif équivalent.

Le doigt 1222 de la butée mobile 122 vient en butée sur un ergot 1211 d'une bague 121 qui est positionnée autour de l'arbre 137. La bague 121 est en contact, d'un côté, avec une bride 150 du corps de vanne et, de l'autre côté, avec le carter 131 de l'actionneur 130. Pour permettre à l'actionneur de transmettre la rotation produite par le moteur à l'arbre d'entraînement, le carter 131 de l'actionneur comporte un trou 1312 qui coopère avec un pion de bridage 126 fixé sur la bride 150.

Des trous 1501 répartis à intervalle angulaire constant, définissant un pas angulaire $\delta 2$ (figure 6), sont percés dans la bride 150. De même, des trous 1212 repartis uniformément suivant un pas angulaire $\delta 1$ (figure 6) sont usinés dans la bague 121. Les trous 1501 et 1212 sont percés sur une même circonférence par rapport à l'axe de rotation 138. Chaque série de trous étant usinés suivant un pas angulaire constant $\delta 1$ ou $\delta 2$, la résolution R du réglage de la butée est alors définie par la relation:

$$R=(\delta 2 - \delta 1)$$

Le nombre de trous nécessaires peut être alors défini par les relations:

$$N1=360/\delta1 \text{ et } N2=(\delta1/2R)-1,$$

sous réserve que N2=360/δ2 et en fonction la plage de réglage désirée, et avec

N1: nombre de trous dans la bague,
N2: nombre de trous dans la bride du corps supérieur,
R: résolution de réglage (en degrés),
δ1: pas angulaire trous N1 (en degrés), et
δ2: pas angulaire trous N2 (en degrés).

A titre d'exemple, si la bride du corps de vanne comporte 17 trous (N2) chacun décalés d'un pas de 17° et la bague 20 trous (N1) décalés d'un pas de 18°, la résolution de réglage R est de 1° et on obtient une précision de réglage de course en rotation de $\pm0.5°$.

Le réglage de la butée est réalisé par le positionnement et le blocage en rotation de la bague 121 sur la bride 150 au moyen d'une goupille d'arrêt 125 du type boulon ou autre introduite dans deux trous en regard. Les trous étant situés au delà du carter 131 de l'actionneur, l'opération de réglage de la butée par positionnement de la bague s'effectue sans démontage de l'actionneur. Un écrou 127 (figure 3) peut être prévu pour serrer cette partie de la bague 121.

La figure 7 montre un système de butée similaire à celui illustré aux figures 5 et 6 mais dans lequel le réglage de la butée s'effectue dans le plan radial. A cet effet, le système de butée comprend une bague 220 munie d'un ergot 2211 qui est positionnée sur une bride 250. La bague 220 et la bride 250 comprennent chacune une série de trous 2212 et 2501, percés radialement sur le pourtour de la bague et de la bride. La série de trous 2212 définit un premier pas angulaire δ1 alors que la série de trous 2501 définit un deuxième pas angulaire δ2. La résolution ainsi que le nombre de trous nécessaire au réglage de la butée sont déterminés suivant les relations définies précédemment pour le système de butée illustré en figure 6. Le positionnement et l'immobilisation de la bague 220 sur la bride 250 sont effectués au moyen d'une goupille 225 introduite dans deux trous en regard. Le maintien de la goupille 225 est assuré par un élément de blocage 226 qui prend appui dans un des trous voisins de la bride.

Le dispositif de vanne selon l'invention permet donc de réaliser une vanne de régulation performante à faible coût notamment grâce à la structure spécifique de l'élément d'obturation qui autorise une grande course de régulation permettant de diminuer la précision requise pour l'actionneur. La modification aisée du profil de l'échancrure de l'élément d'obturation permet, de plus, de s'adapter à de multiples lois de régulation y compris pour des évolutions non linéaires. Cet élément est également avantageux par le fait qu'il n'entraîne pas de transformation de mouvement dans le fluide comme c'est le cas dans les vannes linéaires à pignon ou crémaillère.

De plus, le dispositif de l'invention peut comprendre une butée mécanique réglable de façon discrète qui est facile à fabriquer et à manipuler.

Le dispositif de vanne de l'invention présente encore d'autres avantages dans une utilisation pour un moteur-fusée. Il permet un contrôle en tout ou rien selon les séquences de commande pneumatique habituellement en vigueur avec arrêt sur une butée mécanique préalablement réglée. Il permet aussi un pilotage du moteur fusée en boucle ouverte suivant des lois de positions de vanne préprogrammées ou bien une régulation du moteur en boucle fermée par action sur des vannes avec ou sans consigne de position.

Ces fonctionnalités peuvent être obtenues avec le même dispositif aussi bien au sol qu'en vol.

Par l'utilisation de technologies peu coûteuses, le dispositif de vanne de l'invention apporte un gain économique par rapport à ses homologues pneumatiques qui n'assurent pourtant que la fonction tout ou rien, tout en évitant l'utilisation d'une électrovanne de pilotage associée. Le dispositif de l'invention n'engendre pas non plus de surcoût pour son intégration dans le lanceur puisqu'il s'adapte au système électrique existant sans ajout de composants.

## Revendications

1. Dispositif de vanne de régulation comprenant un corps de vanne (10) délimitant un conduit (13) de circulation de fluide dans lequel est disposé un élément d'obturation (40) entraîné en rotation par un moyen actionneur (30) via un arbre d'entraînement (37), l'élément d'obturation (40) étant formé d'une jupe (41) définissant un corps creux formé par une paroi cylindrique ou tronconique, ladite paroi étant fermée dans sa partie supérieure qui est connectée à un arbre d'entraînement et ouverte dans sa partie inférieure, la paroi comportant en outre une échancrure (43) présentant un profil en pente, **caractérisé en ce que** l'échancrure défini une ouverture qui s'agrandit progressivement en s'éloignant de la partie inférieure de la paroi et qui s'étend autour de ladite paroi sur un angle d'au moins 250°, et **en ce que** l'échancrure est profilée de manière à définir un passage de fluide variable dans le conduit en fonction de la position en rotation dudit élément d'obturation (40) entre une position de fermeture dans laquelle la jupe obture le conduit et une position d'ouverture dans laquelle la jupe s'efface totalement du conduit de circulation de fluide permettant au fluide de circuler librement dans le conduit.

**2.** Dispositif de vanne selon la revendication 1, **caractérisé en ce que** l'échancrure (43) présente un profil droit qui délimite une ouverture se rétrécissant jusqu'à rejoindre l'extrémité inférieure de la jupe.

**3.** Dispositif de vanne selon la revendication 1, **caractérisé en ce que** l'échancrure (53) présente un profil qui est fonction de la loi de perte de charge désirée

**4.** Dispositif de vanne selon l'une quelconque des revendications 1 à 3, **caractérisé en ce que** l'échancrure s'étend autour de la jupe de l'élément d'obturation sur un angle allant jusqu'à 270°.

**5.** Dispositif de vanne selon l'une quelconque des revendications 1 à 4. **caractérisé en ce que** le moyen actionneur (30) comprend au moins un moteur électrique (32) et un réducteur (34) dont la sortie est accouplée avec l'arbre d'entraînement.

**6.** Dispositif de vanne selon la revendication 5, **caractérisé en ce** le moteur électrique (32) est irréversible.

**7.** Dispositif de vanne selon la revendication 5 ou 6, **caractérisé en ce que** le moyen actionneur (30) comprend en outre au moins un capteur de position (35).

**8.** Dispositif de vanne selon l'une quelconque des revendications 5 à 7, **caractérisé en ce que** le moyen actionneur (30) comprend en outre un second moteur électrique redondant (33).

**9.** Dispositif de vanne selon l'une quelconque des revendications 1 à 8, **caractérisé en ce qu'**il comprend un système de butée mécanique réglable (20) formé d'une butée mobile (22) solidaire de l'arbre d'entraînement (37) et d'une butée fixe (21) réglable sur le corps de vanne (10).

**10.** Dispositif de vanne selon la revendication 9, **caractérisé en ce que** la butée fixe comprend une bague (121) comportant un ergot (1211), ladite bague étant réglable en position sur une bride (150) du corps de vanne.

**11.** Dispositif de vanne selon la revendication 10, **caractérisé en ce que** la bague (121) comporte une première pluralité de trous (1212) espacés uniformément suivant un premier intervalle angulaire ($\delta$1) et **en ce que** la bride (150) du corps de vanne comporte une seconde pluralité de trous (1501) espacés uniformément suivant un second intervalle angulaire ($\delta$2), le réglage de la butée étant réalisé par immobilisation de la bague sur la bride au moyen d'une goupille d'arrêt (135).

**12.** Dispositif de vanne selon la revendication 11, **caractérisé en ce que** les première et seconde pluralités de trous sont percées dans le plan radial de la bague et de la bride respectivement.

**Claims**

**1.** A control valve device comprising a valve body (10) defining a fluid flow duct (13) in which a shutter element (40) is disposed that is turned by actuator means (30) via a drive shaft (37), the shutter element (40) being formed by a skirt (41) defining a hollow body formed by a cylindrical or frustoconical wall, said wall being closed in its top portion that is connected to a drive shaft and open in its bottom portion, the wall further comprising a notch (43) presenting a sloping profile, the device being **characterised in that** the notch defines an opening that grows progressively going away from the bottom portion of the wall and that extends around said wall over an angle of at least 250°, and **in that** the notch is profiled so as to define a variable flow section in the duct as a function of the angular position of said shutter element (40) between a closed position in which the skirt closes off the duct and an open position in which the skirt is fully retracted from the fluid flow duct so as to allow the fluid to flow freely in the duct.

**2.** A valve device according to claim 1, **characterised in that** the notch (43) presents a right profile which defines an opening that tapers until it meets the bottom end of the skirt.

**3.** A valve device according to claim 1, **characterised in that** the notch (53) presents a profile that is a function of the desired head loss relationship.

4. A valve device according to any one of claims 1 to 3, **characterised in that** the notch extends around the skirt of the shutter element over an angle of up to 270°.

5. A valve device according to any one of claims 1 to 4, **characterised in that** the actuator means (30) comprise at least one electric motor (32) and a gearbox (34) whose outlet is coupled to the drive shaft.

6. A valve device according to claim 5, **characterised in that** the electric motor (32) is irreversible.

7. A valve device according to claim 5 or claim 6, **characterised in that** the actuator means (30) further includes at least one position sensor (35).

8. A valve device according to any one of claims 5 to 7, **characterised in that** the actuator means (30) further includes a redundant second electric motor (33).

9. A valve device according to any one of claims 1 to 8, **characterised in that** it includes an adjustable mechanical abutment system (20) formed by a moving abutment (22) secured to the drive shaft (37) and a stationary abutment (21) that is adjustable on the valve body (10).

10. A valve device according to claim 9, **characterised in that** the stationary abutment comprises a ring (121) having a stud (1211), said ring being adjustable in position on a flange (150) of the valve body.

11. A valve device according to claim 10, **characterised in that** the ring (121) includes a first plurality of holes (1212) uniformly spaced apart at a first angular interval ($\delta$1), and **in that** the flange (150) of the valve body includes a second plurality of holes (1501) uniformly spaced apart at a second angular interval ($\delta$2), the abutment being adjusted by locking the ring to the flange by means of a stop pin (135).

12. A valve device according to claim 11, **characterised in that** the first and second pluralities of holes are pierced in the radial plane of the ring and of the flange, respectively.

## Patentansprüche

1. Regulierventilvorrichtung, die einen Ventilkörper (10) aufweist, der eine Fluidzirkulationsleitung (13) abgrenzt, in der ein Verschlußelement (40) angeordnet ist, das in Drehung von einem Betätigungsmittel (30) über eine Antriebswelle (37) angetrieben wird, wobei das Verschlußelement (40) aus einer Schürze (41) geformt ist, die einen Hohlkörper definiert, der von einer zylindrischen oder kegelstumpfförmigen Wand gebildet wird, wobei die Wand in ihrem oberen Teil, der an eine Antriebswelle angeschlossen ist, verschlossen und in ihrem unteren Teil offen ist, wobei die Wand ferner einen Ausschnitt (43) aufweist, der ein schräges Profil hat, **dadurch gekennzeichnet, daß** der Ausschnitt eine Öffnung definiert, die sich allmählich bei ihrem Entfernen von dem unteren Teil der Wand vergrößert und sich um die Wand über einen Winkel von mindestens 250° erstreckt, und daß der Ausschnitt so profiliert ist, daß er einen variablen Fluiddurchgang in der Leitung in Abhängigkeit von der Drehposition des Verschlußelements (40) zwischen einer Verschlußposition, in der die Schürze die Leitung verschließt, und einer Öffnungsposition, in der sich die Schürze völlig von der Fluidzirkulationsleitung entfernt und es dem Fluid erlaubt, in der Leitung frei zu zirkulieren, definiert.

2. Ventilvorrichtung nach Anspruch 1, **dadurch gekennzeichnet, daß** der Ausschnitt (43) ein gerades Profil aufweist, das eine Öffnung abgrenzt, die sich verjüngt, bis sie das untere Ende der Schürze erreicht.

3. Ventilvorrichtung nach Anspruch 1, **dadurch gekennzeichnet, daß** der Ausschnitt (53) ein Profil aufweist, das von dem gewünschten Lastverlustgesetz abhängt.

4. Ventilvorrichtung nach einem der Ansprüche 1 bis 3, **dadurch gekennzeichnet, daß** sich der Ausschnitt um die Schürze des Verschlußelements über einen Winkel bis zu 270° erstreckt.

5. Ventilvorrichtung nach einem der Ansprüche 1 bis 6, **dadurch gekennzeichnet, daß** das Betätigungsmittel (30) mindestens einen Elektromotor (32) und ein Untersetzungsgetriebe (34) aufweist, dessen Ausgang mit der Antriebswelle gekoppelt ist.

6. Ventilvorrichtung nach Anspruch 5, **dadurch gekennzeichnet, daß** der Elektromotor (32) nicht umkehrbar ist.

7. Ventilvorrichtung nach Anspruch 5 oder 6, **dadurch gekennzeichnet, daß** das Betätigungsmittel (30) ferner mindestens einen Positionssensor (35) aufweist.

8. Ventilvorrichtung nach einem der Ansprüche 5 bis 7, **dadurch gekennzeichnet, daß** das Betätigungsmittel (30) ferner einen zweiten redundanten Elektromotor (33) aufweist.

9. Ventilvorrichtung nach einem der Ansprüche 1 bis 8, **dadurch gekennzeichnet, daß** sie ein einstellbares mechanisches Anschlagsystem (20) aufweist, das aus einem beweglichen Anschlag (22) gebildet ist, der mit der Antriebswelle (37) fest verbunden ist, und aus einem stationären Anschlag (21), der auf dem Ventilkörper (10) einstellbar ist.

10. Ventilvorrichtung nach Anspruch 9, **dadurch gekennzeichnet, daß** der stationäre Anschlag einen Ring (121) aufweist, der einen Dorn (1211) aufweist, wobei die Position des Rings auf einem Flansch (150) des Ventilkörpers einstellbar ist.

11. Ventilvorrichtung nach Anspruch 10, **dadurch gekennzeichnet, daß** der Ring (121) mehrere erste Löcher (1212) aufweist, die gleichmäßig entlang eines ersten Winkelintervalls ($\delta$1) beabstandet sind, und daß der Flansch (150) des Ventilkörpers mehrere zweite Löcher (1501) aufweist, die gemäß einem zweiten Winkelintervall ($\delta$2) gleichmäßig beabstandet sind, wobei das Einstellen des Anschlags durch Fixieren des Rings auf dem Flansch mittels eines Fixierstifts (135) erfolgt.

12. Ventilvorrichtung nach Anspruch 11, **dadurch gekennzeichnet, daß** die mehreren ersten und zweiten Löcher jeweils in der radialen Ebene des Rings und des Flanschs gebohrt sind.

33

32

31

30

34

37

35

36

21

22

20

23

38

40

16

10

12

E

18

43    43A

15

41

10

13

17

11

14

E

FIG.1

FIG.2

FIG.3

FIG.4

FIG.7

FIG.5

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1128108 A
- US 3815871 A
- US 2639883 A
- US 3314643 A
- EP 0524589 A